# EUROPÄISCHE PATENTSCHRIFT

(11) **EP 0 579 126 B1**
(45) Veröffentlichungstag und Bekanntmachung des Hinweises auf die Patenterteilung: **30.10.1996**
(21) Anmeldenummer: 93110981.3
(22) Anmeldetag: 09.07.1993
(51) Int. Cl.: H02B 1/44, H02G 3/14, H02B 1/06

(54) **Wassergeschütztes Installationsgerät**
Waterproof installation apparatus
Appareil d'installation protégé contre l'eau

(30) Priorität: 14.07.1992 DE 4223075
(43) Veröffentlichungstag der Anmeldung: 19.01.1994
(73) Patentinhaber: ABB PATENT GmbH, D-68309 Mannheim (DE)
(72) Erfinder: Mittler, Leo, D-58540 Meinerzhagen (DE); Kemmereit, Jürgen, D-58636 Iserlohn (DE)
(74) Vertreter: Rupprecht, Klaus, Dipl.-Ing.

(56) Entgegenhaltungen:
- EP-A- 0 019 801
- CH-A- 675 653
- DE-A- 1 465 256
- DE-A- 3 303 764
- DE-U- 1 662 945
- US-A- 4 099 646
- US-A- 4 381 063

## Beschreibung

Die Erfindung betrifft ein wassergeschütztes Installationsgerät, z. B. Schalter, Taster, Steckdose oder ähnliches, zum Einbau in UP-Einbauwanddosen, mit einem Tragring, mit einem aus einer nicht wassergeschützten Gerätebaureihe entnommenen Geräteeinsatz, mit einem Geräteoberteil, mit einem Rahmen und mit einer hieran angesetzten Zentralscheibe, welche das Geräteoberteil aufnimmt und mit einem Klappdeckel versehen ist, der die Zentralscheibe weitgehend überdeckt.

Allgemein gebräuchlich sind wassergeschützte Installationsgeräte, z. B. nach Schutzart IP 44, bei denen jedes Gerät mit einem Tragring verbunden ist, der seinerseits von einem Rahmen abgedeckt wird, in welchem eine Zentralscheibe angeordnet ist, die das jeweilige Geräteoberteil aufnimmt. Derartige Geräte sind im allgemeinen mit einem aufwendigen Dichtsystem (US-A-43 81 063) versehen oder besitzen zwischen den äußeren Abdeckungen und dem jeweiligen Ersatzteil eine speziell profilierte Dichtung (DE-A-14 65 256), welche das Eindringen von Feuchtigkeit verhindert. Hierbei sind die jeweiligen Einzelteile der Installationsgeräte häufig als aneinander angepaßte Komponenten ausgeführt. Hieraus resultiert, daß für jedes Gerät eine auf den Verwendungszweck abgestimmte Ausführung der Einzelteile vorzusehen ist, was eine Vielzahl unterschiedlicher Herstellwerkzeuge erfordert.

Aus der CH-A-675 653 ist ein als Steckdose ausgebildetes wassergeschütztes Installationsgerät der eingangs genannten Art bekannt geworden, bei welchem zur Verhinderung des Eindringens von Spritzwasser in das Gerät ein Dichtungsring zwischen einem Rahmen und der als Abdeckplatte bezeichneten Zentralscheibe eingeklemmt ist sowie ein Klappdeckel den in den Rahmen eingepaßten Steckertopf überdeckt.

Hierbei zeigt sich, daß die einzuklemmende Dichtung sowohl hinsichtlich Montage als auch bei der Bevorratung einigen Aufwand verursacht.

Ausgehend von diesem Stand der Technik ist es daher Aufgabe der Erfindung ein wassergeschütztes Installationsgerät der eingangs genannten Art zu schaffen, welches unter Vermeidung der vorstehend beschriebenen Nachteile aufgrund der Formenvielfalt kostengünstig bei zweckgerechter Ausgestaltung der einzelnen Gerätearten herstellen läßt.

Diese Aufgabe wird erfindungsgemäß durch die kennzeichnenden Merkmale des Patentanspruches 1 gelöst.

Danach besitzt der Rahmen des erfindungsgemäßen Installationsgerätes zur Verbesserung des Schutzes gegen Wasserbeaufschlagung eine umlaufende Nut, in welche die Zentralscheibe mit einem umlaufend angeformten Steg eingreift. Hierbei sind die Nutflanken der umlaufenden Nut so angeordnet, daß sie dicht an dem an der Zentralscheibe angeformten Steg anliegen. Vorteilhafterweise ist hierbei die Nutbreite höchstens 10 % größer als die Stegbreite des eingreifenden Steges. Ebenso ist die Zentralscheibe mit einer umlaufenden Nut versehen, in welche das jeweilige Geräteoberteil mit einem stegartigen Sockelrand eingreift.

Gemäß einer bevorzugten Ausführungsform der Erfindung kann das Geräteoberteil je nach gewünschtem Einsatzzweck des Installationsgerätes und des daraus resultierenden Geräteeinsatzes als Wippe, z. B. für Schalter und Taster, oder als Steckeraufnahmetopf ausgebildet sein.

In weiterer Verbesserung der Erfindung dient dabei die Nut-Steg-Anordnung zwischen dem Rahmen und der Zentralscheibe sowie zwischen der Zentralscheibe und dem Geräteoberteil als spritzwasserdichtes Dichtungslabyrinth.

Gemäß einer bevorzugten Ausgestaltung der Erfindung ist es zweckmäßig, die innen liegenden, d. h. zur Mitte hin angeordneten Nutflanken höher auszuführen als die äußeren Nutflanken. Hierdurch wird das Eindringen von Wasser in das Innere des Installationsgerätes auf einfache Weise verhindert, indem in die Nut eingedrungenes Wasser abfließt, bevor es die höhere Barriere überwunden hat.

In weiterer Ausgestaltung der Erfindung kann vorgesehen sein, daß der an der Zentralscheibe bzw. am Geräteoberteil angeformte Steg bzw. stegartige Sockelrand als Doppelsteg ausgebildet ist, der in zwei parallele umlaufende Nuten eingreift.

Hierbei kann gemäß einer zweckmäßigen Ausgestaltung der Erfindung vorgesehen sein, daß in den umlaufenden Spalt zwischen den den Doppelsteg bildenden Einzelstegen ein Dichtungsring eingelegt ist.

Mit Hilfe der erfindungsgemäßen Ausgestaltung des wassergeschützten Installationsgerätes ist es möglich, die große Vielfalt unterschiedlicher Geräteeinzelteile für normale Installationsgeräte und für wassergeschützte Installationsgeräte zu verringern, da nunmehr auch für wassergeschützte Installationsgeräte die Geräteeinsätze für nicht wassergeschützte Installationsgeräte Verwendung finden können, da der besondere Wasserschutz mit Hilfe der mit einem schwenkbaren Deckel versehenen Zentralscheibe bereits weitestgehend gewährleistet ist.

Eine zweckmäßige Ausgestaltung der Erfindung sieht hierbei vor, daß der von dem Klappdeckel überdeckte Bereich der Zentralscheibe gegenüber dem nicht überdeckten Bereich hervorragt, so daß hierdurch eine weitere Barriere gegen mögliches Eindringen von Wasser gebildet ist.

Diese und weitere vorteilhafte Ausgestaltungen und Verbesserungen sind Gegenstand der Unteransprüche.

Anhand eines in der Zeichnung dargestellten Ausführungsbeispieles sollen die Erfindung, besondere Ausgestaltungen sowie Verbesserungen der Erfindung näher erläutert und beschrieben werden.

Es zeigen:
- Figur 1: ein erfindungsgemäßes Installationsgerät,
- Figur 2: ein Installationsgerät gemäß Figur 1, jedoch mit Doppelnut und
- Figur 3: ein Installationsgerät gemäß Figur 1 mit zusätzlicher Barriere an der Zentralscheibe.

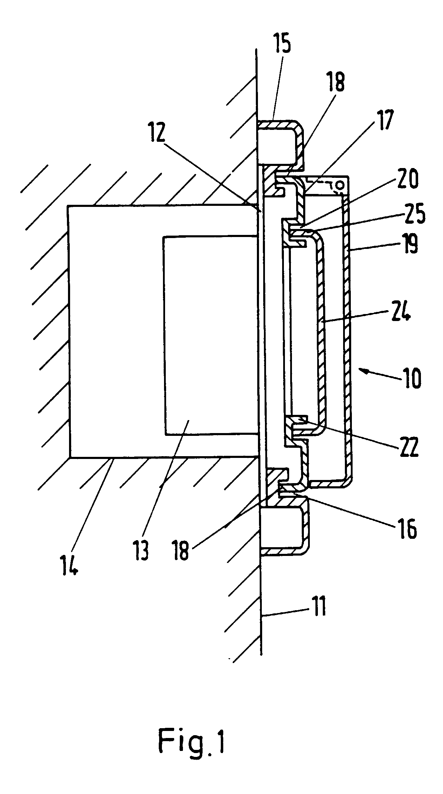

In Figur 1 ist ein Installationsgerät 10 für den versenkten Einbau an einer Montagefläche 11 dargestellt, das mit einem Tragring 12, der mit einem Geräteeinsatz 13 verbunden ist, der seinerseits in eine von einer Unterputz-Wandeinbaudose 14 in der Montagefläche 11 gebildeten Ausnehmung hineinragt, und sich an der Montagefläche 11 abstützt.

Der Randbereich des Tragrings 12 wird umlaufend von einem Rahmen 15 überdeckt, dessen Innenkante mit einer umlaufenden Ringnut 16 versehen ist, in welche ein an eine Zentralscheibe 17 angeformter umlaufender Steg 18 eingreift.

An der Zentralscheibe 17 ist ein Deckel 19 schwenkbar befestigt, der die Zentralscheibe 17 nahezu vollständig überdeckt.

Die Zentralscheibe 17 besitzt ferner in dem von dem Dekkel 19 überdeckten Bereich eine umlaufende Nut 20, welche eine Ausnehmung 22 begrenzt und die zur Aufnahme eines Geräteoberteils 24 dient. Das Geräteoberteil 24 besitzt hierfür einen stegartigen umlaufenden Sockelrand 25, der in die Nut 20 formschlüssig eingreift.

Das erfindungsgemäße Installationsgerät 10 kann hierbei als Steckdose mit einem entsprechenden Geräteeinsatz 13 und einem hieran angepaßten Geräteoberteil 24 ebenso ausgebildet sein wie auch als Schalter oder Taster. In allen Fällen sind die Geräteeinsätze und die Geräteobertiele entsprechend ihrer funktionellen Bestimmung aneinander angepaßt. Das besondere am erfindungsgemäßen Installationsgerät 10 besteht darin, daß sowohl der Geräteeinsatz 13 als auch das Geräteoberteil 24 aus einer Baureihe für nicht wassergeschützte Installationsgeräte übernommen ist, wobei die Eignung für den Einsatz als wassergeschütztes Installationsgerät 10 durch die entsprechende Ausgestaltung der Zentralscheibe 17 mit dem Deckel 19 und der umlaufenden Nut 20 sowie des Rahmens 15 mit der an seiner Innenkante angeordneten umlaufenden Nut 18 gewährleistet ist.

Wie der als Längsschnitt des erfindungsgemäßen Installationsgerätes 10 wiedergegebenen Darstellung in Figur 1 zu entnehmen ist, bilden die in enger Toleranz aufeinander abgestimmten Nut-Steg-Anordnungen 16, 18 sowie 20, 25 eine spritzwasserdichte Labyrinthabdichtung.

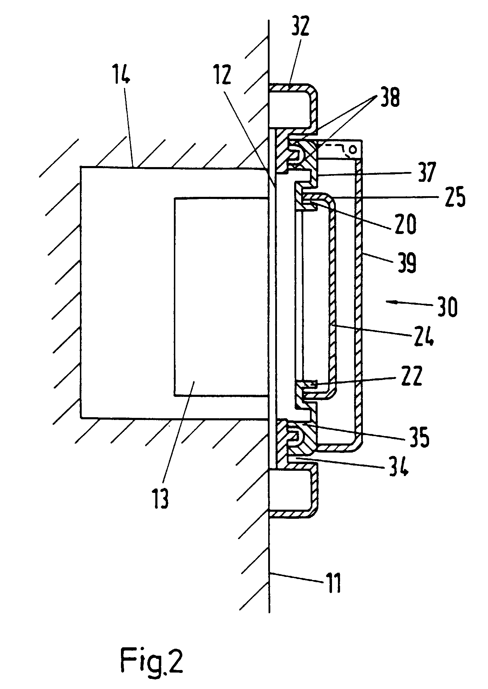

In Figur 2 ist ein elektrisches wassergeschütztes Installationsgerät 30 ebenfalls im Längsschnitt dargestellt, das ebenso wie das in Figur 1 gezeigte Installationsgerät 10 für den versenkten Einbau an einer Montagefläche 11 vorgesehen ist. In die Montagefläche 11 ist eine Wandeinbaudose 14 eingesetzt, in welche ein an einem Tragring 12 befestigter Geräteeinsatz 13 hineingreift.

Auch hier wird der Randbereich umlaufend von einem Rahmen 32 überdeckt, wobei im Unterschied zu der in Figur 1 gezeigten Ausgestaltung des dortigen Rahmens 15 an der Innenkante des Rahmens 32 eine aus zwei parallel zueinander an der Innenkante des Rahmens 32 angeordneten umlaufenden Nuten 34, 35 gebildete Doppelnut, in welche ein entsprechend angepaßte Zentralscheibe 37 mit einem Doppelsteg 38 formschlüssig eingreift. Ferner besitzt die Zentralscheibe 37 einen Klappdeckel 39 sowie, von diesem verdeckt, eine umlaufende Ringnut 20, in welche ein Geräteoberteil 24 mit seinem stegartigen umlaufenden Sockelrand 25 eingreift.

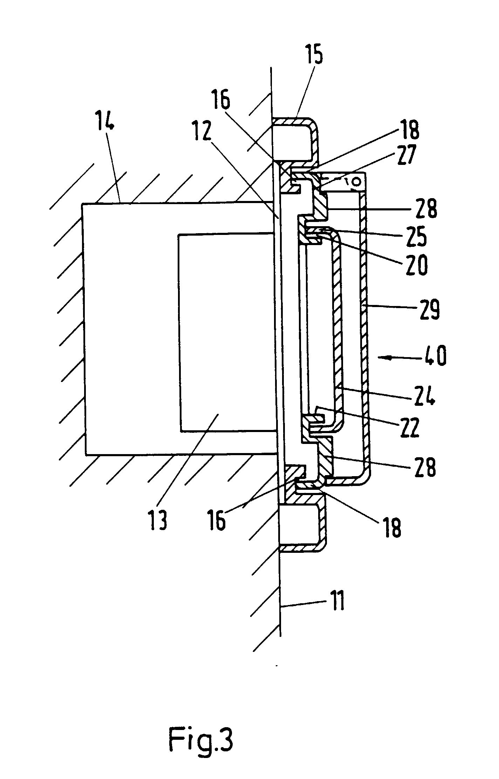

In Figur 3 ist eine Darstellung entsprechend Figur 1 wiedergegeben, wobei gleiche Bezugsziffern gleiche Merkmale bezeichnen. Unterschiedlich gegenüber Figur 1 ist die Ausgestaltung der Zentralscheibe 27 mit einer zusätzlichen Barriere 28, welche vom Klappdeckel 29 übergriffen ist.

Die Barriere 28 ist als über die Auflagefläche für den Klappdeckel 29 herausragende Anformung an die Zentralscheibe 27 vorgesehen, so daß auftreffendes Spritzwasser daran gehindert ist, unter den Deckel einzudringen.

## Patentansprüche

1. Wassergeschütztes Installationsgerät (10), z. B. Schalter, Taster, Steckdose oder ähnliches, zum versenkten Einbau an einer Montagefläche (11), z. B. in einer UP-Einbauwanddose (14), mit einem Tragring (12), der mit einem aus einer nicht wassergeschützten Gerätebaureihe entnommenen Geräteeinsatz (13) verbunden ist, mit einem Geräteoberteil (24), mit einem Rahmen (15, 32) und einer hieran angesetzten Zentralscheibe (17, 27, 37), welche das Geräteoberteil (24) aufnimmt und mit einem Klappdeckel (19, 29, 39) versehen ist, der die Zentralscheibe (17, 27, 37) weitgehend überdeckt, dadurch gekennzeichnet, daß der Rahmen (15) eine umlaufende Nut (16,20,34) aufweist, in welche die Zentralscheibe (17,27,37) mit einem umlaufend angeformten Steg (18,38) eingreift und deren Nutflanken dicht am Steg (18,38) anliegen, und daß die Zentralscheibe (17, 27, 37) ebenfalls mit einer umlaufenden Nut (20) versehen ist, in welche das Geräteoberteil (24) mit einem stegartigen umlaufenden Sockelrand (25) eingreift.

2. Installationsgerät nach Anspruch 1, dadurch gekennzeichnet, daß die Nut-Steg-Anordnung (16, 18, 34, 35, 38, 20, 25) zwischen dem Rahmen (15, 32) und der Zentralscheibe (17, 27, 37) sowie zwischen der Zentralscheibe (17, 27, 37) und dem Geräteoberteil (24) als spritzwasserdichtes Dichtungslabyrinth dient.

3. Installationsgerät nach einem der vorherigen Ansprüche, dadurch gekennzeichnet, daß die zur Mitte hin angeordneten inneren Flanken der Nuten (16, 20, 34) höher sind als die äußeren Nutflanken.

4. Installationsgerät nach einem der vorherigen Ansprüche, dadurch gekennzeichnet, daß der an der Zentralscheibe (37) angeordnete Steg als Doppelsteg (38) ausgebildet ist, der in zwei parallele umlaufende Nuten (34, 35) eingreift.

5. Installationsgerät nach Anspruch 9, dadurch gekennzeichnet, daß in den Spalt zwischen den den Doppelsteg (38) bildenden Einzelstegen ein Dichtungsring eingelegt ist.

6. Installationsgerät nach einem der vorherigen Ansprüche, dadurch gekennzeichnet, daß an der Zentralscheibe (27) eine zusätzliche Barriere (28) angeformt ist, die von dem Deckel (29) umgriffen ist.

## Claims

1. Waterproof accessory (10), for example a switch, pushbutton, socket-outlet or the like, for cavity mounting on a mounting surface (11), for example in a flush-mounting wall box (14), having a support ring (12) which is joined to a contact block (13) taken from a non-waterproof range of accessories, having an upper accessory part (24), and having a frame (15, 32) and a central disc (17, 27, 37) which is attached thereto, receives the upper accessory part (24) and is provided with a hinged lid (19, 29, 39) which largely covers the central disc (17, 27, 37), characterized in that the frame (15) has a circumferential groove (16, 20, 34) in which the central disc (17, 27, 37) engages with a circumferentially integrally formed web (18, 38) and whose groove sides bear tightly against the web (18, 38), and in that the central disc (17, 27, 37) is likewise provided with a circumferential groove (20), in which the upper accessory part (24) engages with a web-like circumferential base rim (25).

2. Accessory according to Claim 1, characterized in that the groove/web arrangement (16, 18, 34, 35, 38, 20, 25) between the frame (15, 32) and the central disc (17, 27, 37) as well as between the central disc (17, 27, 37) and the upper accessory part (24) serves as a labyrinth seal which is proof against splashwater.

3. Accessory according to one of the preceding claims, characterized in that the inner sides, arranged towards the middle, of the grooves (16, 20, 34) are higher than the outer groove sides.

4. Accessory according to one of the preceding claims, characterized in that the web arranged on the central disc (37) is constructed as a double web (38) which engages in two parallel circumferential grooves (34, 35).

5. Accessory according to Claim 4, characterized in that a sealing ring is inserted into the gap between the individual webs forming the double web (38).

6. Accessory according to one of the preceding claims, characterized in that an additional barrier (28) which is embraced by the lid (29) is integrally formed on the central disc (27).

## Revendications

1. Appareil d'installation (10) protégé contre l'eau, par exemple interrupteur, bouton poussoir, prise de courant ou similaire, pour montage encastré dans une surface de montage (11), par exemple dans une boîte d'encastrement (14) scellée, comportant un anneau-support (12) qui est lié à un élément (13) d'appareil provenant d'un appareil de type non protégé contre l'eau, une partie supérieure (24) d'appareil, un cadre (15, 32) et, montée sur celui-ci, une plaque centrale (17, 27, 37) qui reçoit la partie supérieure (24) de l'appareil et est pourvue d'un couvercle (19, 29, 39) rabattable qui couvre une grande partie de la plaque centrale (17, 27, 37), caractérisé par le fait que le cadre (15) comporte une gorge (16, 20, 34) périphérique dans la quelle le plaque centrale (17, 27, 37) pénètre avec un rebord (18, 38) périphérique et dont les flancs sont serrés sur le rebord (18, 38) et par le fait que la plaque centrale (17, 27, 37) est également pourvue d'une rainure (20) périphérique dans laquelle la partie supérieure (24) d'appareil pénètre avec un rebord (25) de socle périphérique en forme de barrette.

2. Appareil d'installation selon la revendication 1, caractérisé par le fait que l'agencement rainure-rebord (16, 18, 34, 35, 38, 20, 25) entre le cadre (15, 32) et la plaque centrale (17, 27, 37) ainsi qu'entre la plaque centrale (17, 27, 37) et la partie supérieure (24) d'appareil sert de joint à labyrinthe étanche aux projections d'eau.

3. Appareil d'installation selon l'une des revendications précédentes, caractérisé par le fait que les flancs intérieurs, côté milieu, des rainures (16, 20, 34) sont plus hauts que les flancs extérieurs.

4. Appareil d'installation selon l'une des revendications précédentes, caractérisé par le fait que le rebord sur la plaque centrale (37) est agencé sous forme de rebord double (38) qui pénètre dans deux gorges (34, 35) périphériques parallèles.

5. Appareil d'installation selon la revendication 4, caractérisé par le fait qu'un joint est placé dans l'espace entre les rebords élémentaires qui forme le rebord (38) double.

6. Appareil d'installation selon l'une des revendications précédentes, caractérisé par le fait qu'une barrière (28) supplémentaire est aménagée sur la plaque centrale (27), laquelle barrière est chevauchée par le couvercle (29).
